# EUROPEAN PATENT APPLICATION

(11) **EP 4 844 249 A1**
(43) Date of publication of application: **25.11.2026**
(21) Application number: 25747876.8
(22) Date of filing: 24.01.2025
(51) Int. Cl.: F16K 11/072

(54) **VALVE SPOOL STRUCTURE AND MULTI-WAY VALVE**

(30) Priority: 02.02.2024 CN 202420264849 U; 05.02.2024 CN 202420281620 U; 05.02.2024 CN 202420281428 U
(71) Applicant: Zhejiang Dunan Artificial Environment Co., Ltd., Shaoxing, Zhejiang 311835 (CN)
(72) Inventor: SHEN, Cancan, Shaoxing, Zhejiang 311835 (CN); CHEN, Yutao, Shaoxing, Zhejiang 311835 (CN); ZHOU, Xiaowei, Shaoxing, Zhejiang 311835 (CN)
(74) Representative: Winter, Brandl - Partnerschaft mbB
(86) International application number: PCT/CN2025/074909
(87) International publication number: WO 2025/162308

(57) **Abstract**

Disclosed are a valve core structure and a multi-way valve. The valve core structure (10) is rotatably arranged within a valve body (20) of a multi-way valve and is provided with a plurality of mutually-spaced flow passages; each flow passage comprises a flow cavity and flow ports connected to two ends of the flow cavity; a force exerted on the valve core structure (10) by fluids within part of the flow cavities is F1 while a force exerted on the valve core structure (10) by the fluids within the other part of the flow cavities is F2, the directions of the F1 and the F2 being opposite, resulting in an overall force balance of the valve core structure (10). The present solution enables impact forces exerted by fluids on the valve core structure (10) to be in both upward and downward directions, which helps to maintain the force balance of the valve core structure (10), so as to avoid the problem that multi-way valves are prone to internal leakage because valve core structures (10) subjected to fluid impact forces of a same direction undergo force imbalance and are liable to oscillate or be ejected upwardly, thus achieving internal force balance of an interior of the valve core structure (10) during fluid flowing.

## Description

The present disclosure claims priority to Patent Application No. 202420281620.6, filed with the China National Intellectual Property Administration on February 05, 2024, and titled "Valve Core Structure and Multi-Way Valve";

The present disclosure claims priority to Patent Application No. 202420281428.7, filed with the China National Intellectual Property Administration on February 05, 2024, and titled "Multi-Way Valve"; and

The present disclosure claims priority to Patent Application No. 202420264849.9, filed with the China National Intellectual Property Administration on February 02, 2024, and titled "Actuator".

### Technical Field

The present disclosure relates to the technical field of multi-way valves, and in particular, relates to a valve core structure and a multi-way valve.

### Background

The multi-way valve in the prior art includes a valve body and a valve core. A fluid entering the valve body impacts the valve core, and an impact force of the fluid causes an unbalanced force acting on the valve core. Under an action of the fluid force, the valve core is prone to positional movement, thereby reducing a sealing performance between the valve core and the valve body. The technical problem to be solved by the present disclosure is how to reduce a force instability of the valve core.

### Summary

The present disclosure provides a valve core structure and a multi-way valve to solve the problem in the prior art that a valve core structure is subjected to fluid impact forces in a same direction, which easily causes the valve core structure to move or be lifted, thereby resulting in internal leakage of the multi-way valve.

To solve the above problem, according to one aspect of the present disclosure, the present disclosure provides a valve core structure, where the valve core structure includes a plurality of mutually-spaced flow passages, each of the plurality of flow passages includes a flow cavity and flow ports in communication with both ends of the flow cavity, a force exerted by fluids within part of flow cavities on the valve core structure is F1, a force exerted by fluids within another part of the flow cavities on the valve core structure is F2, and F1 and F2 are opposite in direction.

Further, the valve core structure includes a top plate and a bottom plate, the flow ports of the plurality of flow passages are all located at the bottom plate of the valve core structure and are distributed in a circumferential direction of the valve core structure; top portions of part of the flow cavities serve as the top plate of the valve core structure, and the flow ports and openings in communication with the flow ports are provided at bottom portions thereof; bottom portions of another part of the flow cavities serve as the bottom plate of the valve core structure, and openings in communication with the flow ports are provided at top portions thereof; a fluid flowing through the flow cavities whose top portions serve as the top plate of the valve core structure exerts an upward thrust on the valve core structure, and a fluid flowing through the flow cavities whose bottom portions serve as the bottom plate of the valve core structure exerts a downward pressure on the valve core structure.

Further, the plurality of flow passages include a first flow passage and a second flow passage, and the valve core structure has an inner cavity and an outer cavity that are spaced from each other; flow ports of the first flow passage and flow ports of the second flow passage are both provided at the bottom plate of the valve core structure corresponding to the outer cavity; a flow cavity of the first flow passage is formed by the inner cavity and the outer cavity, where a top portion of the inner cavity and a top portion of the outer cavity are both the top plate of the valve core structure, a bottom portion of the inner cavity is an opening, and a bottom portion of the outer cavity is provided with the flow ports; a flow cavity of the second flow passage is formed by the outer cavity, where a part of the bottom portion of the outer cavity has the flow ports, another part of the bottom portion of the outer cavity is the bottom plate of the valve core structure, and a top portion of the outer cavity is an opening.

Further, the valve core structure further includes an inner cylinder, an intermediate cylinder, an outer cylinder, and a plurality of radial partition plates, where a region between the inner cylinder and the intermediate cylinder forms the inner cavity, and a region between the intermediate cylinder and the outer cylinder forms the outer cavity; the radial partition plates are spaced apart between the intermediate cylinder and the outer cylinder in the circumferential direction of the valve core structure and divide the outer cavity into a plurality of sub-cavities with openings being opposite in direction, where two sub-cavities of the plurality of sub-cavities form a flow cavity of the first flow passage and are spaced apart in the circumferential direction of the valve core structure, bottom portions of the two sub-cavities are each provided with a flow port, and top portions of the two sub-cavities all serve as the top plate of the valve core structure; a sub-cavity forming a flow cavity of the second flow passage is a single sub-cavity and has a top opening, and a bottom portion thereof includes the bottom plate of the valve core structure located between two flow ports of the second flow passage.

Further, a portion of the top plate of the valve core structure is disposed at top openings of the outer cavity and the inner cavity, and a portion of the bottom plate of the valve core structure is disposed at a bottom opening of the outer cavity; the radial partition plates are respectively connected to the top plate and the bottom plate at both axial ends of the valve core structure; the plurality of flow ports are all disposed on the bottom plate; the top plate forms a cavity bottom wall of the flow cavity of the first flow passage, and the bottom plate is used for forming a cavity bottom wall of the flow cavity of the second flow passage.

According to another aspect of the present disclosure, a multi-way valve is provided. The multi-way valve includes a valve body, a valve core sealing gasket, an actuation driving assembly and the above-mentioned valve core structure; a plurality of circumferentially distributed flow holes are provided at a bottom portion of the valve body; the valve core structure is disposed at a bottom portion of a cavity of the valve body, and each of the plurality of flow ports corresponds to one of the plurality of flow holes; at least one flow cavity with a top opening is in communication with the cavity of the valve body; the valve core sealing gasket is disposed between the valve body and the valve core structure; and the actuation driving assembly is disposed on the valve body and is in driving connection with the valve core structure so as to drive the valve core structure to rotate and regulate a flow condition of the multi-way valve.

Further, the multi-way valve further includes a limiting assembly, an elastic member, and a valve core shaft; the valve core shaft is located in the valve body, and an end thereof is fixedly disposed at the bottom portion of the cavity of the valve body; the valve core structure is sleeved on an outer periphery of the valve core shaft and is rotatably disposed in the valve body; the limiting assembly is disposed on the valve core shaft and is located on a side of the valve core structure away from the bottom portion of the cavity of the valve body; two ends of the elastic member respectively abut against the limiting assembly and the valve core structure so as to press the valve core structure against the valve core sealing gasket and press the valve core sealing gasket against the bottom portion of the cavity of the valve body.

Further, the limiting assembly includes a retaining ring and a washer sleeved on the valve core shaft; the two ends of the elastic member respectively abut against the washer and a top surface of the valve core structure; an annular clamping groove is provided on an outer periphery of the valve core shaft, and the retaining ring is fitted into the annular clamping groove to limit the position of the retaining ring on the valve core shaft; and the washer is in stop fit with the retaining ring.

Further, a first limiting groove is provided on the side of the valve core structure away from the bottom portion of the cavity of the valve body, at least a portion of the valve core shaft is located in the first limiting groove, the washer and the elastic member are both located in the first limiting groove, two ends of the elastic member respectively abut against the washer and a bottom wall of the first limiting groove, a stop shoulder is provided in the first limiting groove, and a side of the washer away from the retaining ring is in stop fit with the stop shoulder.

Further, the first limiting groove includes a first groove section and a second groove section connected to each other, where a radial dimension of the first groove section is larger than that of the second groove section; the first groove section is located on the side of the valve core structure away from the bottom portion of the cavity of the valve body; the washer is movably disposed in the first groove section; a portion of the elastic member is telescopically disposed in the second groove section; a connection position between the first groove section and the second groove section forms the stop shoulder; and the washer is in limiting fit with an inner wall of the first groove section and is in stop fit with a bottom wall of the first groove section.

Further, the inner cylinder of the valve core structure has a first limiting groove having an upward opening; the actuation driving assembly includes a driving rotating shaft, an end of the driving rotating shaft is inserted into the cavity of the valve body, and the end of the driving rotating shaft inserted into the cavity of the valve body is in limiting fit with the first limiting groove.

Further, a second limiting groove is provided at a bottom portion of the driving rotating shaft, and a plurality of mating portions are circumferentially distributed on the end of the driving rotating shaft inserted into the cavity of the valve body; a mated portion is provided on the side of the valve core structure away from the bottom portion of the cavity of the valve body, and the mating portions and the mated portion are in limiting fit so as to snap-fit the driving rotating shaft and the inner cylinder.

Further, each of the plurality of mating portions is a snap-fitting protrusion, and the mated portion includes the first limiting groove and a plurality of limiting clamping grooves circumferentially spaced apart around an opening edge of the first limiting groove, where a plurality of snap-fitting protrusions are respectively disposed in the plurality of limiting clamping grooves in a one-to-one correspondence.

Further, the actuation driving assembly includes an actuator, and the actuator includes a housing, a power source, a gear set, a magnetic member, and a control board; the power source is connected to the housing; the gear set is connected to the power source; the gear set includes at least an input gear and an output gear, and the power source can drive the output gear to rotate through the input gear; the output gear is configured to be connected to the valve core structure; the magnetic member is mounted on the output gear; a position detection sensor is disposed on the control board, and the position detection sensor is located between the magnetic member and the control board and is aligned with the magnetic member.

Further, an accommodating groove is provided at an axial end of the output gear, and the magnetic member is located in the accommodating groove.

Further, the housing is provided with a first limiting portion, and an end of the first limiting portion extending through the control board abuts against the output gear; and a portion of the output gear provided with the accommodating groove, and the magnetic member are both located in a cavity defined by the first limiting portion.

Further, the housing includes an upper housing and a lower housing, where the upper housing and the lower housing are connected and jointly define an accommodating cavity for accommodating the power source and the gear set; the first limiting portion is located on an inner wall of the lower housing facing the upper housing, and is movably connected to the output gear so as to limit a radial movement of the output gear.

Further, the housing includes an upper housing and a lower housing, where the upper housing and the lower housing are connected and jointly define an accommodating cavity for accommodating the power source and the gear set; a second limiting portion is provided on an inner wall of the upper housing facing the lower housing, and is movably connected to the output gear so as to limit a radial movement of the output gear.

Further, a limiting boss coaxially arranged with the output gear protrudes from the inner wall of the upper housing facing the lower housing; a positioning groove is formed on a side of the limiting boss facing the output gear, and a through hole is formed in a bottom of the positioning groove; a portion of the output gear is capable of passing through the positioning groove and extending into the through hole, and the limiting boss and the through hole form the second limiting portion.

Further, at least two electric wires are provided between the power source and the control board; at an end of each of the at least two electric wires is provided with an electrical clip, and the electrical clip is snap-fitted with a power supply terminal of the power source; at an other end of the each of the at least two electric wires is provided with a pin, and the pin is snap-fitted with the control board; and the actuator further includes a connector, and the connector is snap-fitted with the control board through the pin.

By adopting the technical solution of the present disclosure, a valve core structure with a plurality of mutually-spaced flow passages is provided, each of the plurality of flow passages includes a flow cavity and flow ports in communication with two ends of the flow cavity; a force exerted on the valve core structure by fluids within part of the flow cavities is F1 while a force exerted on the valve core structure by fluids within another part of the flow cavities is F2, F1 and F2 being opposite in direction.

By means of the present solution, impact forces exerted by fluids passing through the valve core structure on the valve core structure are in both upward and downward directions, which helps to maintain the force balance of the valve core structure, so as to avoid a problem that multi-way valves are prone to internal leakage because valve core structures subjected to fluid impact forces of a same direction undergo force imbalance and are liable to oscillate or be ejected upwardly, thus achieving internal force balance of an interior of the valve core structure during fluid flowing.

### Brief Description of the Drawings

The accompanying drawings, which constitute a part of the present disclosure, are used for providing a further understanding of the present disclosure; and illustrative embodiments of the present disclosure and descriptions thereof are intended to explain the present disclosure and are not construed to unduly limit the present disclosure. In the drawings:
Fig. 1 shows a schematic structural diagram of a valve core structure provided in an embodiment of the present disclosure;
Fig. 2 shows a schematic structural diagram of the valve core structure in Fig. 1 from another perspective;
Fig. 3 shows a bottom view of the valve core structure in Fig. 1;
Fig. 4 shows a top view of the valve core structure in Fig. 1;
Fig. 5 shows a schematic structural diagram of a multi-way valve provided in another embodiment of the present disclosure;
Fig. 6 shows an exploded view of the multi-way valve in Fig. 5;
Fig. 7 shows a sectional view of the multi-way valve in Fig. 5;
Fig. 8 shows an enlarged view of a selected position in Fig. 7;
Fig. 9 shows a bottom view of the multi-way valve in Fig. 5;
Fig. 10 shows a schematic structural diagram of a retaining ring of the multi-way valve in Fig. 5;
Fig. 11 shows a schematic structural diagram of a driving rotating shaft of the multi-way valve in Fig. 5;
Fig. 12 shows a schematic structural diagram of an actuation driving assembly of the multi-way valve in Fig. 1;
Fig. 13 shows an internal structural schematic diagram of the actuation driving assembly in Fig. 12;
Fig. 14 shows a sectional view of the actuation driving assembly in Fig. 12;
Fig. 15 shows a partial structural schematic diagram of the actuation driving assembly in Fig. 12;
Fig. 16 shows a partial structural schematic diagram of a power source of the actuation driving assembly in Fig. 12;
Fig. 17 shows a partial structural schematic diagram of the power source and a connector of the actuation driving assembly in Fig. 12.

The reference numerals in the drawings include: 10. valve core structure; 101. first flow passage; 1011. first flow cavity; 1012. first flow port; 102. second flow passage; 1021. second flow cavity; 1022. second flow port; 103. weight reduction cavity; 104. inner cavity; 105. outer cavity; 11. inner cylinder; 111. first limiting groove; 1111. first groove section; 1112. second groove section; 112. limiting clamping groove; 12. intermediate cylinder; 13. outer cylinder; 14. radial partition plate; 15. top plate; 16. bottom plate; 20. valve body; 201. flow hole; 21. valve seat; 22. valve cover; 31. valve core sealing gasket; 32. flat sealing gasket; 33. first sealing ring; 40. actuation driving assembly; 41. driving rotating shaft; 411. second limiting groove; 412. snap-fitting protrusion; 42. housing; 421. upper housing; 4211. limiting boss; 4212. positioning groove; 4213. through hole; 4214. second limiting portion; 422. lower housing; 4221. first limiting portion; 423. accommodating cavity; 43. power source; 431. worm; 432. output shaft; 433. electric wire; 434. power supply terminal; 435. electrical clip; 44. gear set; 441. input gear; 442. output gear; 4421. ring groove; 4422. accommodating groove; 443. transmission gear; 444. gear shaft; 445. second sealing ring; 45. magnetic member; 46. control board; 461. hollow-out; 462. connecting hole; 47. pin; 471. deformation hole; 48. connector; 49. position detection sensor; 50. limiting assembly; 51. retaining ring; 511. clamping ring; 512. clamping groove; 52. washer; 60. elastic member; 70. valve core shaft; 71. annular clamping groove.

### Detailed Description of the Embodiments

The technical solution in embodiments of the present disclosure will be clearly and completely described below with reference to the accompanying drawings in the embodiments of the present disclosure. Apparently, the embodiments described are only a part rather than all of the embodiments of the present disclosure. The following description of at least one exemplary embodiment is merely illustrative in nature and is in no way intended to limit the present disclosure and any application or use thereof. Based on the embodiments of the present disclosure, all other embodiments obtained by those of ordinary skill in the art without creative work shall fall within the scope of protection of the present disclosure.

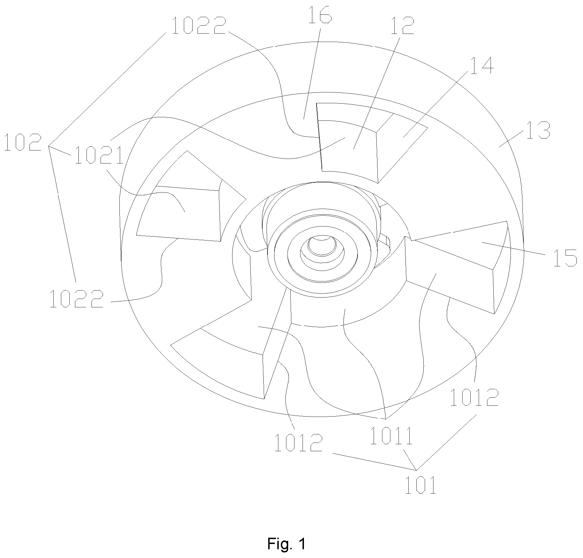

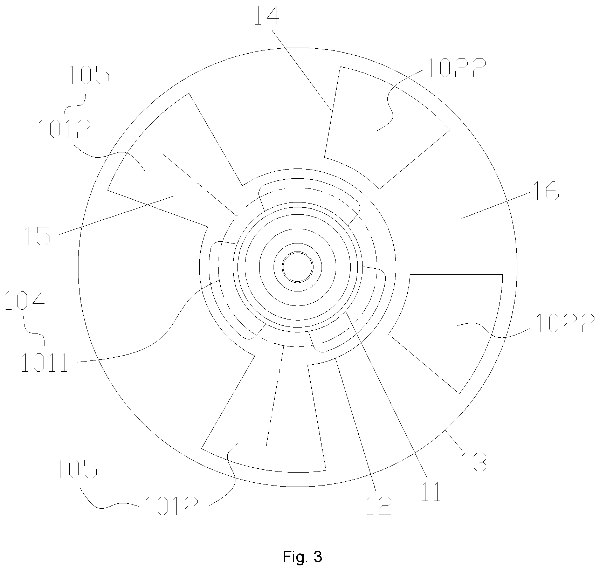

As shown in Fig.1 to Fig.4, an embodiment of the present disclosure provides a valve core structure 10. The valve core structure 10 is rotatably disposed inside a valve body 20 of a multi-way valve and includes a plurality of mutually-spaced flow passages. Each of the plurality of the flow passages includes a flow cavity and flow ports in communication with both ends of the flow cavity; a force exerted on the valve core structure by fluids within part of flow cavities is F1, and a force exerted on the valve core structure by fluids within another part of the flow cavities is F2, F1 and F2 being opposite in direction. In an embodiment, the valve core structure 10 includes a top plate 15 and a bottom plate 16. The flow ports of the plurality of flow passages are all located at the bottom plate 16 of the valve core structure 10 and are distributed in a circumferential direction of the valve core structure 10. Top portions of part of the flow cavities serve as the top plate 15 of the valve core structure 10, and the flow ports and openings in communication with the flow ports are provided at bottom portions thereof, that is, the openings face downward. Bottom portions of another part of the flow cavities serve as the bottom plate 16 of the valve core structure 10 where the flow ports are located, and openings in communication with the flow ports are provided at top portions thereof, that is, the openings face upward. Cavity bottom walls of the part of flow cavities with downward openings are located above the openings of the corresponding flow cavities. The cavity bottom walls of another part of flow cavities with upward openings are located below the openings of the corresponding flow cavities. That is, the cavity bottom walls of the two types of flow cavities are arranged at positions opposite to the openings of their respective flow cavities in an axial direction of the valve core structure 10. A fluid flowing through the flow cavities whose top portions serve as the top plate 15 of the valve core structure 10 exerts an upward thrust on the valve core structure 10, and a fluid flowing through the flow cavities whose bottom portions serve as the bottom plate 16 of the valve core structure 10 exerts a downward pressure on the valve core structure 10, so that the valve core structure 10 achieves overall force balance.

In the present embodiment, the bottom walls of the two types of flow passages are arranged at positions opposite to the openings of their respective flow cavities, so impact forces exerted by fluids passing through the valve core structure 10 on the valve core structure 10 are in both upward and downward directions. This arrangement is conducive to maintaining the force balance of the valve core structure, and avoids the problem that multi-way valves are prone to internal leakage because valve core structures subjected to fluid impact forces in a same direction undergo force imbalance and are liable to oscillate or be ejected upwardly, thus achieving internal force balance of an interior of the valve core structure 10 during fluid flowing.

As shown in Fig.1 to Fig.4, the plurality of flow passages include a first flow passage 101 and a second flow passage 102. The valve core structure 10 includes an inner cavity 104 and an outer cavity 105 that are spaced from each other. Flow ports of the first flow passage 101 and flow ports of the second flow passage 102 are both disposed on the bottom plate 16 of the valve core structure 10 corresponding to the outer cavity 105. A flow cavity of the first flow passage 101 is formed by the inner cavity 104 and the outer cavity 105. A top portion of the inner cavity 104 and a top portion of the outer cavity 105 both serve as the top plate 15 of the valve core structure 10. A bottom portion of the inner cavity 104 is an opening, and the flow ports are provided at a bottom portion of the outer cavity 105. The flow cavity of the second flow passage 102 is formed by the outer cavity 105 with an upward opening. The flow ports are provided at a part of the bottom portion of the outer cavity 105, another part of the bottom portion of the outer cavity 105 serves as the bottom plate 16 of the valve core structure 10, and a top portion of the outer cavity 105 is an opening.

**In** the present embodiment, the first flow passage 101 includes a first flow cavity 1011 and two first flow ports 1012 in communication with both ends of the first flow cavity 1011. The second flow passage 102 includes a second flow cavity 1021 and two second flow ports 1022 in communication with both ends of the second flow cavity 1021. An opening of the first flow cavity 1011 faces downward, and an opening of the second flow cavity 1021 faces upward. The first flow cavity 1011 in the present embodiment is jointly composed of the outer cavity 105 and the inner cavity 104, and the second flow cavity 1021 is only composed of the outer cavity 105. This helps to guarantee a spacing effect between the first flow cavity 1011 and the second flow cavity 1021 as well as a structural strength of the valve core structure 10, and meanwhile facilitates a design of oppositely oriented openings for two flow cavities. The first flow passage 101 is a groove-shaped passage with a cavity bottom wall at the top portion and a fully open bottom portion, and the impact force exerted by the fluid inside the first flow passage 101 on the valve core structure 10 always acts upward. The second flow cavity 1021 is a groove-shaped passage with a fully open top portion and a cavity bottom wall at the bottom portion, and the impact force exerted by the fluid inside the second flow cavity 1021 on the valve core structure 10 always acts downward.

As shown in Fig.1 to Fig.4, the valve core structure 10 further includes an inner cylinder 11, an intermediate cylinder 12, an outer cylinder 13, and a plurality of radial partition plates 14. A region between the inner cylinder 11 and the intermediate cylinder 12 forms the inner cavity 104, and a region between the intermediate cylinder 12 and the outer cylinder 13 forms the outer cavity 105. The plurality of radial partition plates 14 are spaced apart between the intermediate cylinder 12 and the outer cylinder 13 in the circumferential direction of the valve core structure 10 and divide the outer cavity 105 into a plurality of sub-cavities with openings being opposite in direction. Two sub-cavities of the plurality of sub-cavities form the flow cavity of the first flow passage 101 and are spaced apart in the circumferential direction of the valve core structure 10; bottom portions of the two sub-cavities are each provided with a flow port, and the top portions thereof serve as the top plate 15 of the valve core structure. Only one sub-cavity of the plurality of sub-cavities forms the flow cavity of the second flow passage 102, top portion of the sub-cavity is open, and bottom portion thereof includes the bottom plate 16 of the valve core structure 10 located between two flow ports.

This arrangement facilitates a formation of the inner cavity 104, the outer cavity 105 and a plurality of sections of sub-cavities of the outer cavity 105, and meanwhile facilitates a formation of the first flow cavity 1011 and the second flow cavity 1021. **In** an embodiment, the valve core structure 10 in the present embodiment is divided into a plurality of fan-shaped zones at equal angles (40°) in a circumferential direction, and a sub-cavity between any two adjacent radial partition plates corresponds to at least one fan-shaped zone. The two sub-cavities for forming the first flow cavity 1011 each correspond to one fan-shaped zone, and one fan-shaped zone spans the two sub-cavities. The inner cavity 104 is an annular cavity, and the two sub-cavities are respectively in communication with the inner cavity 104 at different positions, so the two sub-cavities are communicated through the inner cavity 104 to jointly form the first flow cavity 1011. The sub-cavity for forming the second flow cavity 1021 includes three sequentially adjacent fan-shaped zones which are in communication with one another in sequence.

Further, a portion of the top plate 15 is disposed at top openings of the outer cavity 105 and the inner cavity 104, and a portion of the bottom plate 16 is disposed at a bottom opening of the outer cavity 105. The radial partition plates 14 are respectively connected to the top plate 15 and the bottom plate 16 at both axial ends of the valve core structure 10. The plurality of flow ports are all disposed on the bottom plate 16. The top plate 15 forms a cavity bottom wall of the flow cavity of the first flow passage 101, and the bottom plate 16 is used for forming a cavity bottom wall of the flow cavity of the second flow passage 102. This arrangement facilitates molding of the bottom wall of the first flow cavity 1011 and the second flow cavity 1021, and guarantees a balanced impact effect of the fluid on the whole valve core structure 10. In an embodiment, the top plate 15 in the present embodiment forms the bottom walls of all sub-cavities of the inner cavity 104 and the outer cavity 105 with downward openings. The part of the bottom plate 16 avoiding the plurality of flow ports forms the bottom wall of all sub-cavities of the outer cavity 105 with upward openings. As shown in Fig.1 to Fig.4, the second flow cavity 1021 (the second flow passage 102) spans three fan-shaped zones, the bottom plate 16 for forming the cavity bottom wall of the second flow cavity 1021 is disposed at a bottom portion of a sub-cavity corresponding to a middle fan-shaped zone, and lower sides of sub-cavities corresponding to a left and right fan-shaped zones respectively correspond to the two second flow ports 1022 of the second flow passage 102. The first flow cavity 1011 (the first flow passage 101) spans four fan-shaped zones, the top plate 15 is disposed at tops of all the four fan-shaped zones, the bottom plate 16 is disposed at bottom portions of the sub-cavities corresponding to two middle fan-shaped zones, and lower sides of the sub-cavities corresponding to two fan-shaped zones at the left and right ends respectively correspond to the two second flow ports 1022 of the first flow passage 101.

In the present embodiment, except for the sub-cavities used for forming the first flow cavity 1011 and the second flow cavity 1021, all remaining sub-cavities have upward openings whose cavity bottom walls are formed by the bottom plate 16. This arrangement ensures that at most one of two axial sides of any fan-shaped zone of the valve core structure 10 is blocked by the top plate 15 or the bottom plate 16, which facilitates a weight reduction of the valve core structure 10.

In summary, the first flow cavity 1011 of the first flow passage 101 is a strip-shaped groove cavity enclosed by the inner cavity 104, two outer cavities 105 with downward openings and the top plate 15. Two first flow ports 1012 in communication with both ends of the first flow cavity 1011 are disposed on the bottom plate 16 and are respectively in communication with the two outer cavities 105 with downward openings. The impact force exerted by the fluid inside the first flow passage 101 on the valve core structure 10 acts on the top plate 15, so the impact force applied to the valve core structure 10 always faces upward. The second flow cavity 1021 of the second flow passage 102 is a strip-shaped groove cavity enclosed by one outer cavity 105 with an upward opening spanning three fan-shaped zones and the bottom plate 16. Two second flow ports 1022 in communication with both ends of the second flow cavity 1021 are both disposed on the bottom plate 16 and respectively correspond to two spaced fan-shaped zones for forming the second flow cavity 1021. The impact force exerted by the fluid inside the second flow passage 102 on the valve core structure 10 acts on the bottom plate 16, so the impact force applied to the valve core structure 10 always faces downward.

In the present embodiment, the first flow passage 101 and the second flow passage 102 are located at a same height of the valve core structure 10. This arrangement facilitates miniaturization of the valve core structure 10 and avoids a need for arranging multiple layers on the valve core structure 10 to design a plurality of flow passages.

In an embodiment, the valve core structure 10 further includes a plurality of weight reduction cavities 103 with upward openings, and the plurality of weight reduction cavities 103 are arranged to avoid the flow cavity of the first flow passage 101 and the flow cavity of the second flow passage 102. This arrangement facilitates the weight reduction of the valve core structure 10. The weight reduction cavities 103 in the present embodiment refer to all sub-cavities other than those for forming the first flow cavity 1011 and the second flow cavity 1021.

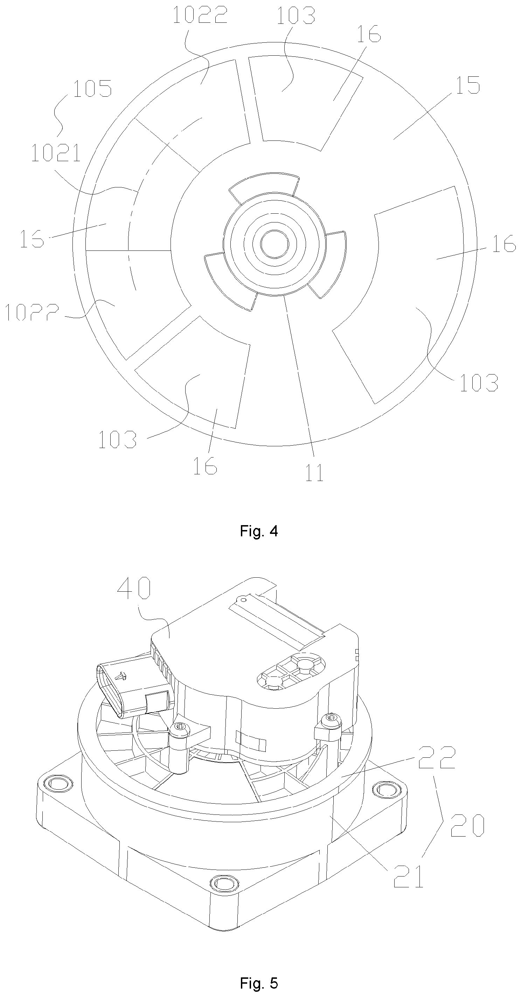

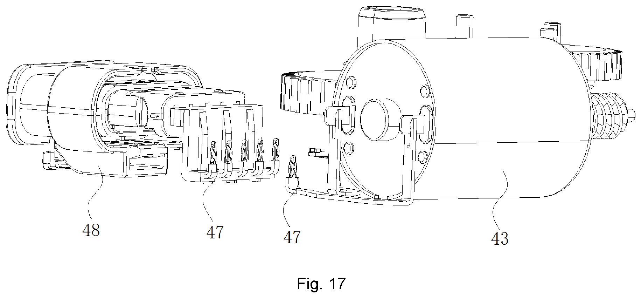

As shown in Fig.5 to Fig.17, another embodiment of the present disclosure provides a multi-way valve. The multi-way valve includes a valve body 20, a valve core sealing gasket 31, an actuation driving assembly 40 and the above-mentioned valve core structure 10. A plurality of circumferentially distributed flow holes 201 are provided at a bottom portion of the valve body 20. The valve core structure 10 is disposed at the bottom portion of a cavity of the valve body 20, and each of the plurality of flow ports corresponds to one of the plurality of flow holes 201. The valve core sealing gasket 31 is disposed around the plurality of flow holes 201 between the valve body 20 and the valve core structure 10. The actuation driving assembly 40 is disposed on the valve body 20 and is in driving connection with the valve core structure 10 so as to drive the valve core structure 10 to rotate and regulate a flow condition of the multi-way valve.

In the present embodiment, the valve core sealing gasket 31 realizes sealing between the valve body 20 and the valve core structure 10, that is, sealing for edges of the plurality of flow holes 201 and edges of the flow ports of the flow passages. This prevents fluid leakage from gaps between the flow ports and the flow holes 201, which would otherwise cause internal leakage of the multi-way valve. The actuation driving assembly 40 drives the valve core structure 10 to rotate and adjust a corresponding condition between the plurality of flow passages and the plurality of flow holes 201, so as to realize regulation of the flow condition of the multi-way valve. Further, the valve core structure 10 of the present embodiment enables impact forces exerted by fluids passing through the valve core structure 10 on the valve core structure 10 to act both upward and downward, and realizes internal force balance inside the valve core structure 10 when the fluid flows through the valve core structure 10.

In some embodiments, at least one flow cavity with a top opening is in communication with the cavity of the valve body 20, and all remaining flow cavities are spaced apart from the cavity of the valve body 20. This arrangement facilitates design of internal balance passages of the valve core structure 10 according to actual working conditions. In the present embodiment, the second flow cavity 1021 of the second flow passage 102 has an upward opening and is in communication with the cavity of the valve body 20. Since the sub-cavity forming the second flow cavity 1021 has an upward opening, no top plate 15 blocks the top of the second flow cavity 1021. Fluid enters from a second flow port 1022 and flows upward into the second flow cavity 1021. As the top of the second flow cavity 1021 has no barrier, an upward flow of the fluid will not be blocked, and no force pushing an entire valve core structure 10 upward will be generated. Afterwards, the fluid flows toward an other second flow port 1022 under an action of self-weight and a guiding effect of the second flow cavity 1021 and flows out from the other second flow port 1022. In this process, the fluid inside the second flow cavity 1021 exerts a downward pressure on the cavity bottom wall (the bottom plate 16) of the second flow cavity 1021 located between the two second flow ports 1022. This pressure balances an overall upward thrust exerted by the first flow passage 101 on the valve core structure 10. It can be understood that in an embodiment, the first flow passage 101 only generates a force pushing the valve core structure 10 upward, and the second flow passage 102 only generates a force pressing the valve core structure 10 downward.

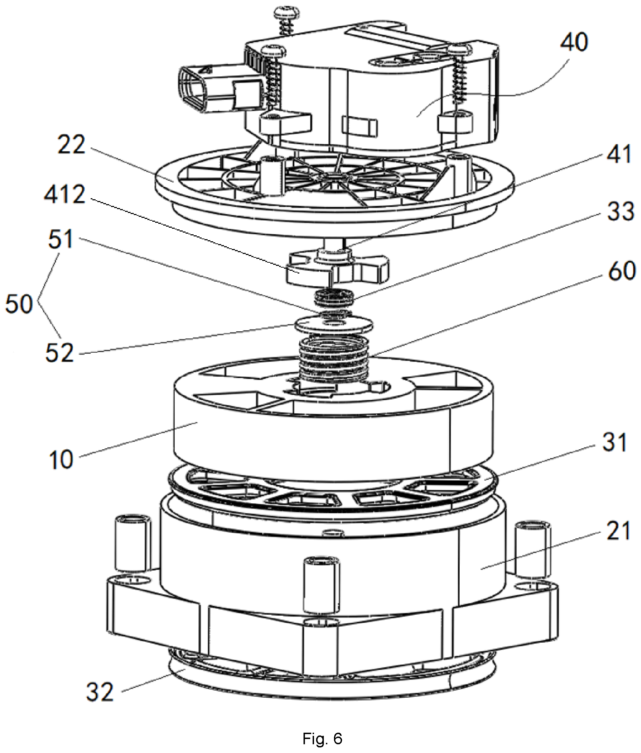

As shown in Fig.6 to Fig.8 and Fig.10, the multi-way valve further includes a limiting assembly 50, an elastic member 60, and a valve core shaft 70. The valve core shaft 70 is located in the valve body 20, and an end thereof is fixedly disposed at the bottom portion of the cavity of the valve body 20. The valve core structure is sleeved on an outer periphery of the valve core shaft 70 and is rotatably disposed in the valve body 20. The limiting assembly 50 is disposed on the valve core shaft 70 and is located on a side of the valve core structure away from the bottom portion of the cavity of the valve body 20. Two ends of the elastic member 60 respectively abut against the limiting assembly 50 and the valve core structure so as to press the valve core structure against the valve core sealing gasket 31 and press the valve core sealing gasket 31 against the bottom portion of the cavity of the valve body 20.

As shown in Fig.5 to Fig.7 and Fig.9, in the present embodiment, the valve body 20 consists of a valve seat 21 and a valve cover 22. The valve seat 21 and the valve cover 22 jointly enclose to form the cavity of the valve body 20. The plurality of flow holes 201 are all disposed at a bottom of the valve seat 21. An end of the valve core shaft 70 is fixed at the bottom portion of the cavity of the valve body 20, and the limiting assembly 50 is disposed on the valve core shaft 70. This structure helps to limit relative positions of the valve core shaft 70, the limiting assembly 50 and the valve body 20, and further guarantees a pressing effect of the elastic member 60 on the valve core structure 10. On the other hand, compared with the prior art where two ends of the elastic member 60 respectively abut against the driving rotating shaft 41 of the actuation driving assembly 40 and the valve core structure 10, the present solution helps to reduce a height of a region for accommodating the elastic member 60, thereby increasing a compression degree of the elastic member 60 and a downward pressing effect on the valve core structure 10. This avoids the problem existing in the prior art that insufficient pressure exerted by the elastic member 60 on the valve core structure 10 easily causes an oscillation of the valve core structure 10 and further leads to internal leakage of the multi-way valve. In addition, an elastic force from both ends of the elastic member 60 can be transmitted to the valve seat 21 of the valve body 20, and the valve cover 22 bears no force. A strength of the valve seat 21 is higher than that of the valve cover 22, so the valve seat 21 is unlikely to deform even when subjected to the elastic force from the elastic member 60. Moreover, the valve cover 22 bears no force, which can avoid deformation of the valve cover 22 caused by the elastic force of the elastic member 60, and thus helps to improve and guarantee a stability performance of the valve core structure 10 and an accuracy and reliability of fluid control by the multi-way valve. On the other hand, an annular sealing groove for mounting the valve core sealing gasket 31 is provided on the bottom portion of the cavity of the valve body 20. A thickness of the valve core sealing gasket 31 is larger than a depth of the annular sealing groove, and the valve core sealing gasket 31 protrudes out of the annular sealing groove. Under an action of the limiting assembly 50 and the elastic member 60, the valve core structure 10 is pressed downward onto the valve core sealing gasket 31 located inside the cavity of the valve body 20, so as to guarantee a sealing effect and reliability of the valve core sealing gasket 31 between the valve body 20 and the valve core structure 10.

Optionally, the multi-way valve further includes a flat sealing gasket 32 and a first sealing ring 33. The flat sealing gasket 32 is disposed on a side of the bottom of the valve seat 21 away from the valve core structure 10 and surrounds the plurality of flow holes 201. The first sealing ring 33 is disposed between the driving rotating shaft 41 and the valve cover 22 so as to guarantee a sealing performance of the multi-way valve.

In an embodiment, the limiting assembly 50 includes a retaining ring 51 and a washer 52 sleeved on the valve core shaft 70. Two ends of the elastic member 60 respectively abut against the washer 52 and a top surface of the valve core structure. An annular clamping groove 71 is provided on an outer periphery of the valve core shaft 70, and the retaining ring 51 is fitted into the annular clamping groove 71 to limit a position of the retaining ring 51 on the valve core shaft 70. The washer 52 is in stop fit with the retaining ring 51.

This arrangement enables an end portion of the elastic member 60 to abut against the washer 52, which helps to enhance an abutting effect between the elastic member 60 and the limiting assembly 50. On the other hand, the retaining ring 51 can realize upward stop limitation of the washer 52 in the axial direction of the valve core shaft 70, so as to guarantee a reliability of the increased compression degree of the elastic member 60 corresponding to the height of the region for accommodating the elastic member 60. Further, the arrangement of the annular clamping groove 71 further guarantees limitation of relative positions among the retaining ring 51, the valve core shaft 70 and the valve body 20 as well as the pressing effect of the elastic member 60 on the valve core structure 10. A certain assembly clearance is provided between the annular clamping groove 71 and the retaining ring 51 to guarantee reliable installation of the retaining ring 51.

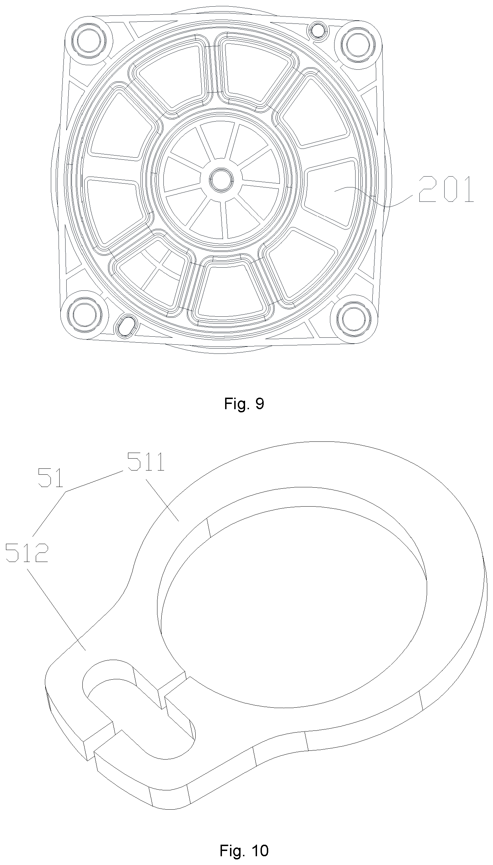

In an embodiment, as shown in Fig.10 in the present embodiment, the retaining ring 51 is a strip-shaped annular member with an opening. Two ends of the retaining ring 51 can move close to or away from each other to drive elastic deformation of the retaining ring 51 so as to clamp or release the annular clamping groove 71. It can be understood that the retaining ring 51 in the present embodiment includes a clamping ring 511 and a clamping groove 512. The clamping ring 511 is a strip-shaped annular member with an opening, and a region enclosed by the clamping ring 511 forms a clamping region for being fitted into the annular clamping groove 71. Two clamping grooves 512 are symmetrically disposed at two ends of the clamping ring 511, and the two clamping grooves 512 can move close to or away from each other to drive elastic deformation of the clamping ring 511 and expand or contract the clamping region. This arrangement allows operators to control elastic opening and closing of the clamping ring 511 by adjusting the two clamping grooves 512, which facilitates operation.

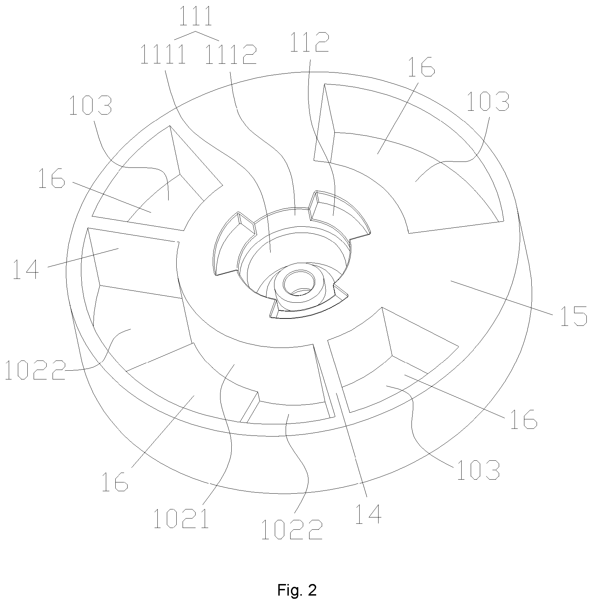

As shown in Fig.2, Fig.6 and Fig.7, a first limiting groove 111 is provided on the side of the valve core structure away from the bottom portion of the cavity of the valve body 20. At least a portion of the valve core shaft 70 is located in the first limiting groove 111. The washer 52 and the elastic member 60 are both located in the first limiting groove 111. Two ends of the elastic member 60 respectively abut against the washer 52 and a bottom wall of the first limiting groove 111. A stop shoulder is provided in the first limiting groove 111, and a side of the washer 52 away from the retaining ring 51 is in stop fit with the stop shoulder. This arrangement realizes guiding and limiting installation of the limiting assembly 50 through the first limiting groove 111, which helps to guarantee coaxiality among the valve core shaft 70, the valve body 20, the limiting assembly 50 and the valve core structure 10. The stop shoulder blocks the washer 52 and provides downward axial stop limitation of the washer 52 along the valve core shaft 70, so as to guarantee the reliability of the increased compression degree of the elastic member 60 corresponding to the height of the region for accommodating the elastic member 60.

In an embodiment, the first limiting groove 111 includes a first groove section 1111 and a second groove section 1112 connected to each other, where a radial dimension of the first groove section 1111 is larger than that of the second groove section 1112. The first groove section 1111 is located on the side of the valve core structure away from the bottom portion of the cavity of the valve body 20. The washer 52 is movably disposed in the first groove section 1111. A portion of the elastic member 60 is telescopically disposed in the second groove section 1112. A connection position between the first groove section 1111 and the second groove section 1112 forms the stop shoulder. The washer 52 is in limiting fit with an inner wall of the first groove section 1111 and is in stop fit with a bottom wall of the first groove section 1111.

In the present embodiment, a radial dimension of the washer 52 is larger than a radial dimension of the elastic member 60, and the washer 52 is in limiting fit with an inner wall of the first groove section 1111. The first groove section 1111 realizes guiding for movement of the washer 52 to avoid deviation or deflection of the washer 52 during movement. The elastic member 60 is in limiting fit with an inner wall of the second groove section 1112 to facilitate installation of the elastic member 60. This arrangement helps to guarantee installation and guiding effects for the elastic member 60 and the limiting assembly 50, and meanwhile facilitates molding of the stop shoulder.

In an embodiment, the valve core shaft 70 in the present embodiment is insert-molded at the bottom portion of the cavity of the valve body 20. This arrangement facilitates a fixed connection between the valve core shaft 70 and the valve body 20, and meanwhile, helps to reduce assembly time, lower costs and improve overall structural strength.

As shown in Fig.2, Fig.6 and Fig.7, the first limiting groove 111 is molded on the inner cylinder 11 of the valve core structure and has an upward opening. The actuation driving assembly 40 includes an actuator and a driving rotating shaft 41. An end of the driving rotating shaft 41 is inserted into the cavity of the valve body 20, and the end of the driving rotating shaft 41 inserted into the cavity of the valve body 20 is in limiting fit with the first limiting groove 111. The actuator is in driving connection with the valve core structure through the driving rotating shaft 41. This arrangement helps to guarantee reliability and stability of driving the valve core structure 10 by the driving rotating shaft 41, and facilitates rotational driving of the valve core structure 10 while guaranteeing coaxiality between the valve core structure 10 and the driving rotating shaft 41 of the actuation driving assembly 40.

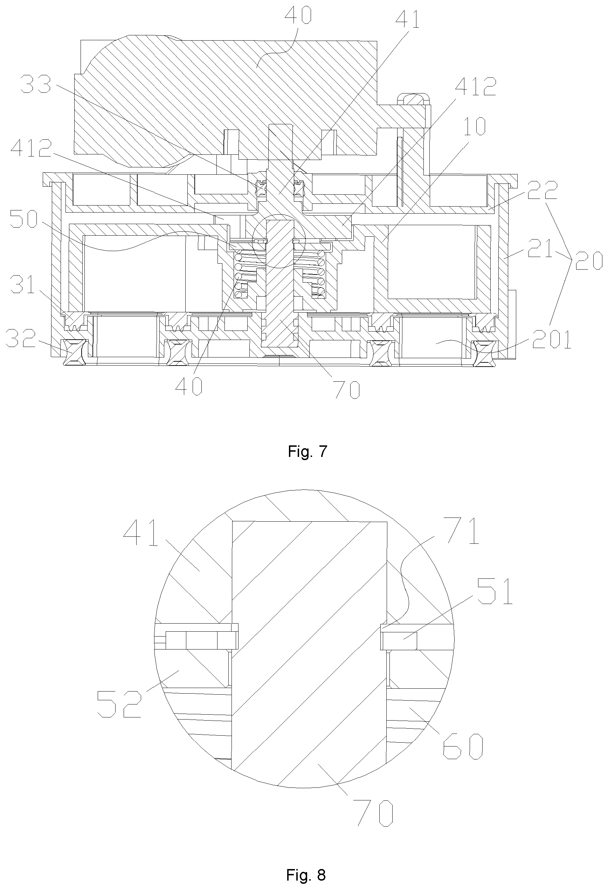

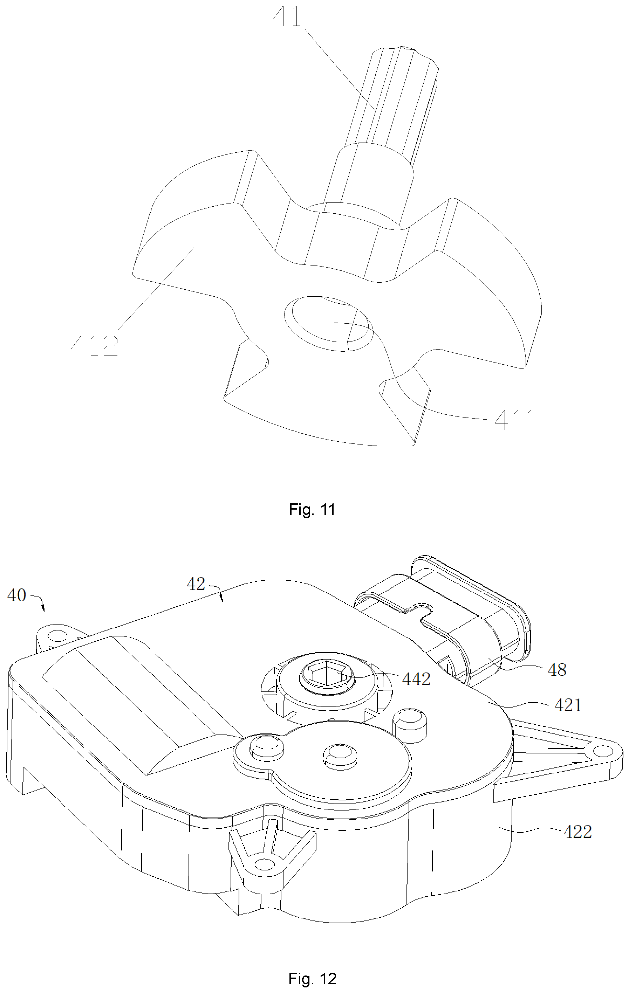

As shown in Fig.7 and Fig.11, a second limiting groove 411 is provided at a bottom portion of the driving rotating shaft 41, and a plurality of mating portions are circumferentially distributed on the end of the driving rotating shaft 41 inserted into the cavity of the valve body 20. A mated portion is provided on the side of the valve core structure away from the bottom portion of the cavity of the valve body 20, and the mating portions and the mated portion are in limiting fit so as to snap-fit the driving rotating shaft 41 and the inner cylinder 11. This arrangement facilitates rotational driving of the valve core structure 10 by the driving rotating shaft 41. The end portion of the valve core shaft 70 is located inside the second limiting groove 411, which helps to further guarantee coaxiality between the valve core shaft 70 and the driving rotating shaft 41, and thus further guarantees coaxiality among the valve core shaft 70, the driving rotating shaft 41, the valve core structure 10 and the valve body 20.

Further, each of the plurality of mating portions is a snap-fitting protrusion 412, and the mated portion includes the first limiting groove 111 and a plurality of limiting clamping grooves 112 circumferentially spaced apart around an opening edge of the first limiting groove 111. A plurality of snap-fitting protrusions 412 are respectively disposed in the plurality of limiting clamping grooves 112 in a one-to-one correspondence. This arrangement guarantees rotational driving of the valve core structure 10 by the driving rotating shaft 41 through snap-fitting between the driving rotating shaft 41 and the valve core structure 10. The plurality of limiting clamping grooves 112 are circumferentially spaced apart around an opening edge of the first groove section 1111 of the first limiting groove 111, and a depth of each limiting clamping groove 112 is smaller than a depth of the first groove section 1111.

On the other hand, the actuator of the actuation driving assembly 40 of the present disclosure realizes precise control over an output power angle of the actuator through cooperation between a position detection sensor 49 and a magnetic ring, so as to improve a rotation precision of the valve core structure 10 inside the multi-way valve. In an embodiment, as shown in Fig.12 to Fig.17, the actuator of the actuation driving assembly 40 includes a housing 42, a power source 43, a gear set 44, a magnetic member 45, and a control board 46. The power source 43 is connected to the housing 42. The gear set 44 is connected to the power source 43. The gear set 44 includes at least an input gear 441 and an output gear 442. The power source 43 can drive the output gear 442 to rotate through the input gear 441. The output gear 442 is configured to be connected to the valve core structure 10. The magnetic member 45 is mounted on the output gear 442. A position detection sensor 49 is disposed on the control board 46, and the position detection sensor 49 is located between the magnetic member 45 and the control board 46 and is aligned with the magnetic member 45.

In the present embodiment, the housing 42 defines an accommodating cavity 423. The power source 43, the gear set 44, the magnetic member 45, and the control board 46 are all mounted inside the accommodating cavity 423. The output gear 442 drives the valve core structure 10 to rotate, and the position detection sensor 49 can sense magnetic field changes of the magnetic member 45. The valve core structure 10 of the present disclosure can also be replaced with other rotating parts outside the multi-way valve field. In the present embodiment, the position detection sensor 49 is configured as a Hall element. This arrangement enables the housing 42 to accommodate components, such as the power source 43 and the gear set 44, protects each component mounted inside the accommodating cavity 423, facilitates assembly of each component, and guarantees structural stability of each component. The power source 43 is configured to output power and transmit the power to the input gear 441. Through a connection with the valve core structure 10 of the multi-way valve, the output gear 442 transmits power to the valve core structure 10 to drive the valve core structure 10 to rotate, thereby realizing pipeline switching. The magnetic member 45 is mounted on the output gear 442, and the control board 46 is provided with the position detection sensor 49 matched with the magnetic member 45. The position detection sensor 49 outputs Hall sensing signals that accurately feed back a rotation angle and operating state of the output gear 442, and thus indirectly control the rotation angle of the valve core structure 10 to improve rotation accuracy of the valve core structure 10 the position detection sensor.

In an embodiment, the magnetic member 45 and the output gear 442 are coaxially arranged. This arrangement enables synchronous rotation of the magnetic member 45 and the output gear 442. The magnetic field changes of the magnetic member 45 identified by the position detection sensor 49 can be used to calculate the rotation angle of the output gear 442, so rotation control of the output gear 442 is more accurate.

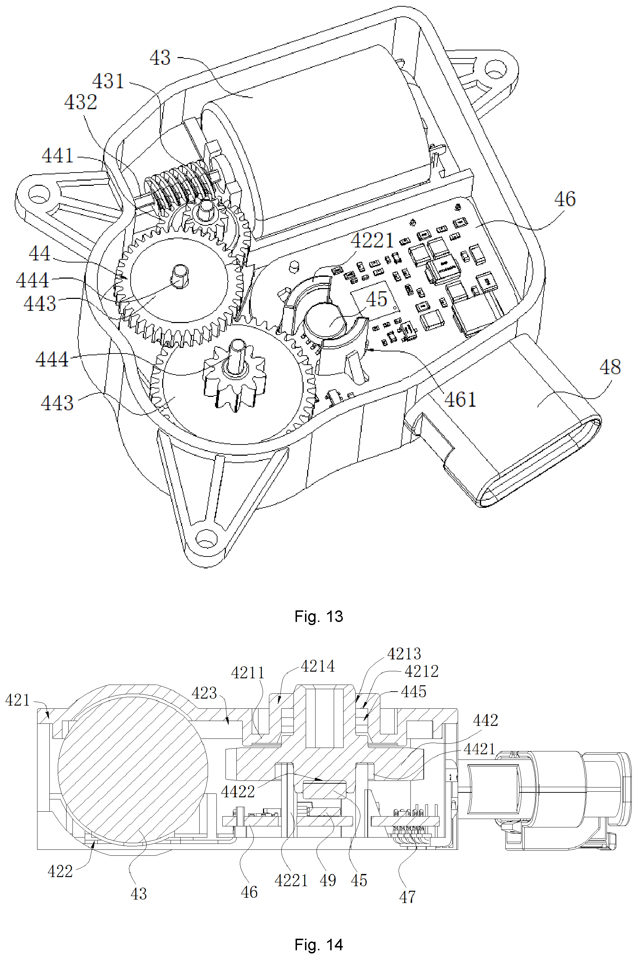

As shown in Fig.14, an accommodating groove 4422 is provided at an axial end of the output gear 442, an opening of the accommodating groove 4422 faces the control board 46, and the magnetic member 45 is located in the accommodating groove 4422. Further, the magnetic member 45 is in an interference fit with an inner wall of the accommodating groove 4422. This arrangement improves convenience and accuracy for installing the magnetic member 45 through the accommodating groove 4422.

It can be understood that in other embodiments not shown in the drawings, the magnetic member 45 can also be disposed at other positions of the output gear 442, as long as the position detection sensor 49 can read the position to determine the rotation angle of the output gear 442, rather than being limited to the above embodiment with coaxial arrangement.

Optionally, the power source 43 uses a motor. **It** can be understood that in other embodiments not shown in the drawings, the power source 43 can also use a steering engine or other driving units capable of driving the input gear 441 to rotate.

In an embodiment, as shown in Fig.13, a worm 431 is connected to an end of an output shaft 432 of the motor. The worm 431 transmits an output force of the motor to the input gear 441 and changes a force transmission direction. The worm 431 and the input gear 441 are arranged at an angle, and in the present embodiment, the output gear 442 is perpendicular to the worm 431.

In the present embodiment, the gear set 44 further includes a plurality of gear shafts 444 and a plurality of transmission gears 443. The plurality of gear shafts 444 are connected to the housing 42, and at least one gear (including the transmission gear 443, the input gear 441 or the output gear 442) is installed on each of the plurality of gear shafts 444. The plurality of transmission gears 443 are disposed between the input gear 441 and the output gear 442 for transmitting power from the input gear 441 to the output gear 442.

As shown in Fig.13 and Fig.14, in the present embodiment, the housing 42 is provided with a first limiting portion 4221. An end of the first limiting portion 4221 extending through the control board 46 abuts against the output gear 442. A portion of the output gear 442 provided with the accommodating groove 4422, and the magnetic member 45 are both located in a cavity defined by the first limiting portion 4221. In an embodiment, the housing 42 includes an upper housing 421 and a lower housing 422. The upper housing 421 and the lower housing 422 are connected and jointly define an accommodating cavity 423 for accommodating the power source 43 and the gear set 44. This arrangement allows separate machining of the upper housing 421 and the lower housing 422 followed by assembly, which reduces machining difficulty. The first limiting portion 4221 is located on an inner wall of the lower housing 422 facing the upper housing 421, and is movably connected to the output gear 442 so as to limit radial movement of the output gear 442. The arrangement of the first limiting portion 4221 stabilizes an axial position of the output gear 442 and improves coaxiality between a power output path and the valve core structure 10, avoiding offset of external components, such as the valve core structure 10 of the multi-way valve.

In an embodiment, the first limiting portion 4221 and the output gear 442 are coaxially arranged, and at least a part of the first limiting portion 4221 can extend into the output gear 442. This arrangement restricts rotation of the output gear 442 by the first limiting portion 4221 as the first limiting portion 4221 extends into the output gear 442. Any radial lateral displacement generated by the output gear 442 will be limited by the first limiting portion 4221. Meanwhile, a coaxial arrangement of the first limiting portion 4221 and the output gear 442 prevents interference between the first limiting portion 4221 and axial rotation of the output gear 442.

Further, an interior of the first limiting portion 4221 is hollow to facilitate placement of the magnetic member 45. An axial end of the output gear 442 is located inside a space enclosed by the first limiting portion 4221, and the portion of the output gear 442 provided with the accommodating groove 4422, and the magnetic member 45 are both located inside the space enclosed by the first limiting portion 4221.

It can be understood that in other embodiments not shown in the drawings, the first limiting portion 4221 can not extend into the output gear 442, but be sleeved outside the output gear 442, spaced apart from the output gear 442 and coaxially arranged with the output gear 442. The first limiting portion 4221 in such embodiments can also limit lateral displacement of the output gear 442.

It should be noted that a vertical direction mentioned in the present embodiment refers to the direction parallel to an axial direction of the output gear 442, and a lateral direction refers to the direction perpendicular to the axial direction of the output gear 442.

In an embodiment, the first limiting portion 4221 in the present embodiment is configured as an annular boss structure. An annular groove 4421 is formed at an end of the output gear 442 facing the lower housing 422, and an end of the first limiting portion 4221 close to the output gear 442 extends into the annular groove 4421. This arrangement makes a matching structure between the annular boss structure and the annular groove 4421 more stable, the two can form circumferential abutment, and a limiting effect is excellent.

It can be understood that other matching limiting structures can also be adopted in other embodiments not shown in the drawings. For example, the first limiting portion 4221 is configured as a cylindrical boss, and a cylindrical groove is formed at the end of the output gear 442 facing the lower housing 422. Such a structure can also achieve a limiting effect and will likewise not interfere with the rotation of the output gear 442.

In an embodiment, as shown in Fig.13, a hollow-out portion 461 is defined on the control board 46 of the present embodiment. The first limiting portion 4221 passes through the hollow-out portion 461 and is movably connected to the output gear 442. The hollow-out portion 461 allows the control board 46 to avoid the first limiting portion 4221, enables the control board 46 to be installed between the output gear 442 and the lower housing 422, and guarantees an available area of the control board 46.

It can be understood that in other embodiments not shown in the drawings, the control board 46 can also be formed by combining multiple plates to avoid extension of the first limiting portion 4221, which is not limited to the hollow-out portion 461 described above.

In an embodiment, a second limiting portion 4214 is provided on an inner wall of the upper housing 421 facing the lower housing 422, and the second limiting portion 4214 is movably connected to the output gear 442 so as to limit radial movement of the output gear 442. This arrangement limits an end of the output gear 442 far away from the lower housing 422, and further guarantees rotation stability of the output gear 442.

As shown in Fig.14, a limiting boss 4211 coaxially arranged with the output gear 442 protrudes from the inner wall of the upper housing 421 facing the lower housing 422. A positioning groove 4212 is formed on a side of the limiting boss 4211 facing the output gear 442, and a through hole 4213 is formed in the bottom of the positioning groove 4212. A portion of the output gear 442 can pass through the positioning groove 4212 and extend into the through hole 4213, and the limiting boss 4211 and the through hole 4213 form the second limiting portion 4214. In the present embodiment, a portion of the output gear 442 passes through the positioning groove 4212 and forms circumferential abutment with the bottom wall of the positioning groove 4212. A side wall of the positioning groove 4212 restricts lateral shaking of the output gear 442, and the output gear 442 finally passes through or extends into the through hole 4213. On one hand, this facilitates connection with the driving rotating shaft 41 and driving connection with the valve core structure 10 of the multi-way valve; on the other hand, the through hole 4213 can limit the output gear 442.

It should be noted that a second sealing ring 445 is further disposed inside the positioning groove 4212. An inner side of the second sealing ring 445 abuts against the output gear 442, and an outer side thereof abuts against a groove wall of the positioning groove 4212 to improve sealing performance between the output gear 442 and the groove wall of the positioning groove 4212 and prevent medium leakage.

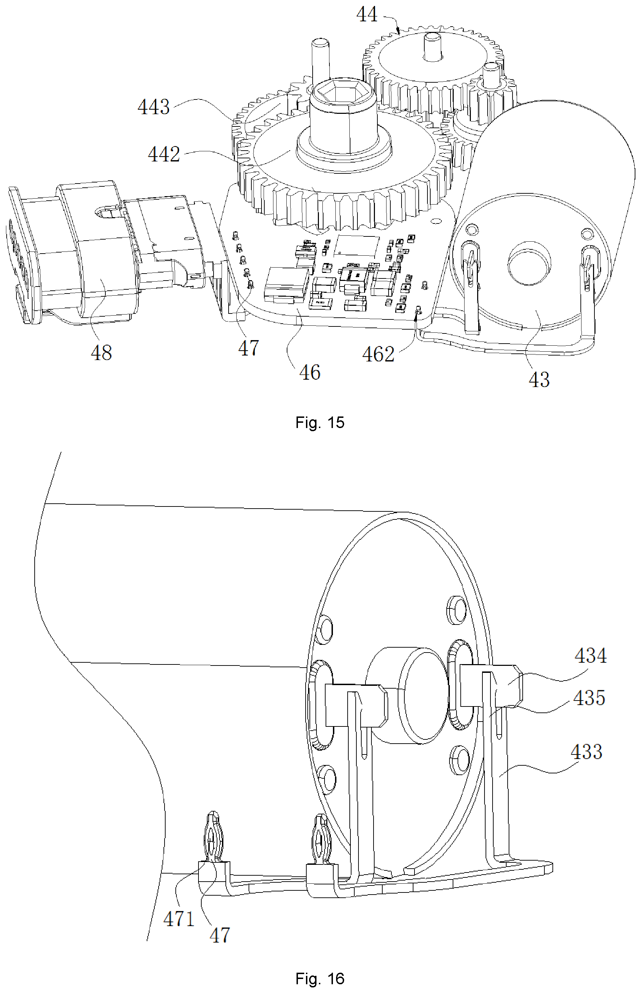

As shown in Fig.15 to Fig.17, at least two electric wires 433 are provided between the power source 43 and the control board 46. At an end of each of the at least two electric wires 433 is provided with an electrical clip 435, and the electrical clip 435 is snap-fitted with a power supply terminal 434 of the power source 43. A pin 47 is provided at an other end of each of the at least two electric wires 433, and the pin 47 is snap-fitted with the control board 46. The power source 43 includes at least two power supply terminals 434. This arrangement eliminates welding between the electric wires 433 and the power supply terminals 434 or the control board 46, and makes connection between the electric wires 433 and the power supply terminals 434 or the control board 46 more convenient. Further, the actuator further includes a connector 48. The connector 48 is electrically connected to the control board 46 through a plurality of pins 47, and the connector 48 is snap-fitted to the control board 46 through the pins 47 to further improve installation convenience, enabling convenient and rapid electrical connection and installation between the connector 48 and the control board 46.

It can be understood that in other embodiments not shown in the drawings, the power source 43 can also be connected to the control board 46 by welding electric wires, which is not limited to the embodiments using the pins 47. Multiple implementations are available for connection between the connector 48 and the control board 46, which will not be elaborated herein.

Optionally, a plurality of connecting holes 462 are opened on the control board 46. The end of each pin 47 close to the control board 46 extends into the corresponding connecting hole 462 and is in interference fit with a wall of the connecting hole 462. A deformation hole 471 is formed at the end of each of the plurality of pins 47 extending into the connecting hole 462. This arrangement guarantees a stable electrical connection between the pins 47 and the control board 46 to avoid disengagement due to the interference fit between the pins 47 and the connecting holes 462. The deformation holes 471 can reduce a structural strength of the ends of the pins 47 inserted into the connecting holes 462 and provide deformation space for the ends of the pins 47 inserted into the connecting holes 462, preventing damage to the connecting holes 462 during the interference fitting with the connecting holes 462.

In an embodiment, a plurality of pins 47 are disposed between the connector 48 and the control board 46, and the plurality of pins 47 are evenly spaced.

The foregoing is merely a preferred embodiment of the present disclosure and is not intended to limit the present disclosure, which may be subject to various modifications and variations to those skilled in the art. Any modification, equivalent replacement, improvement, etc. made within the spirit and principles of the present disclosure should fall within the scope of protection of the present disclosure.

## Claims

1. A valve core structure, comprising a plurality of mutually-spaced flow passages, wherein each of the plurality of flow passages comprises a flow cavity and flow ports in communication with both ends of the flow cavity; a force exerted on the valve core structure by fluids within part of flow cavities is F1, and a force exerted on the valve core structure by fluids within another part of the flow cavities is F2, F1 and F2 being opposite in direction.

2. The valve core structure according to claim 1, wherein the valve core structure comprises a top plate (15) and a bottom plate (16), wherein the flow ports of the plurality of flow passages are all located at the bottom plate (16) of the valve core structure and are distributed in a circumferential direction of the valve core structure; top portions of part of the flow cavities serve as the top plate (15) of the valve core structure, and the flow ports and openings in communication with the flow ports are provided at bottom portions thereof; bottom portions of another part of the flow cavities serve as the bottom plate (16) of the valve core structure, and openings in communication with the flow ports are provided at top portions thereof; a fluid flowing through the flow cavities whose top portions serve as the top plate (15) of the valve core structure exerts an upward thrust on the valve core structure, and a fluid flowing through the flow cavities whose bottom portions serve as the bottom plate (16) of the valve core structure exerts a downward pressure on the valve core structure.

3. The valve core structure according to claim 1, wherein the plurality of flow passages comprise a first flow passage (101) and a second flow passage (102), and the valve core structure has an inner cavity (104) and an outer cavity (105) that are spaced from each other; flow ports of the first flow passage (101) and flow ports of the second flow passage (102) are both provided at the bottom plate (16) of the valve core structure corresponding to the outer cavity (105); a flow cavity of the first flow passage (101) is formed by the inner cavity (104) and the outer cavity (105), wherein a top portion of the inner cavity (104) and a top portion of the outer cavity (105) are both the top plate (15) of the valve core structure, a bottom portion of the inner cavity (104) is an opening, and a bottom portion of the outer cavity (105) is provided with the flow ports; a flow cavity of the second flow passage (102) is formed by the outer cavity (105), wherein a part of the bottom portion of the outer cavity (105) has the flow ports, another part of the bottom portion of the outer cavity (105) is the bottom plate (16) of the valve core structure, and a top portion of the outer cavity (105) is an opening.

4. The valve core structure according to claim 3, wherein the valve core structure further comprises an inner cylinder (11), an intermediate cylinder (12), an outer cylinder (13), and a plurality of radial partition plates (14), wherein a region between the inner cylinder (11) and the intermediate cylinder (12) forms the inner cavity (104), and a region between the intermediate cylinder (12) and the outer cylinder (13) forms the outer cavity (105); the radial partition plates (14) are spaced apart between the intermediate cylinder (12) and the outer cylinder (13) in a circumferential direction of the valve core structure and divide the outer cavity (105) into a plurality of sub-cavities with openings being opposite in direction, wherein two sub-cavities of the plurality of sub-cavities form a flow cavity of the first flow passage (101) and are spaced apart in the circumferential direction of the valve core structure, bottom portions of the two sub-cavities are each provided with a flow port, and top portions of the two sub-cavities all serve as the top plate (15) of the valve core structure; a sub-cavity forming a flow cavity of the second flow passage (102) is a single sub-cavity of the plurality of sub-cavities and has a top opening, and a bottom portion thereof comprises the bottom plate (16) of the valve core structure located between two flow ports of the second flow passage (102).

5. The valve core structure according to claim 4, wherein a portion of the top plate (15) of the valve core structure is disposed at top openings of the outer cavity (105) and the inner cavity (104), and a portion of the bottom plate (16) of the valve core structure is disposed at a bottom opening of the outer cavity (105); the radial partition plates (14) are respectively connected to the top plate (15) and the bottom plate (16) at both axial ends of the valve core structure; the plurality of flow ports are all disposed on the bottom plate (16); the top plate (15) forms a cavity bottom wall of the flow cavity of the first flow passage (101), and the bottom plate (16) is used for forming a cavity bottom wall of the flow cavity of the second flow passage (102).

6. A multi-way valve, comprising a valve body (20), a valve core sealing gasket (31), an actuation driving assembly (40), and the valve core structure according to any one of claims 1 to 5; a plurality of circumferentially distributed flow holes (201) are provided at a bottom portion of the valve body (20); the valve core structure is disposed at a bottom portion of a cavity of the valve body (20), and each of the plurality of flow ports corresponds to one of the plurality of flow holes (201); at least one flow cavity with a top opening is in communication with the cavity of the valve body (20); the valve core sealing gasket (31) is disposed between the valve body (20) and the valve core structure; and the actuation driving assembly (40) is disposed on the valve body (20) and is in driving connection with the valve core structure so as to drive the valve core structure to rotate and regulate a flow condition of the multi-way valve.

7. The multi-way valve according to claim 6, wherein the multi-way valve further comprises a limiting assembly (50), an elastic member (60), and a valve core shaft (70); the valve core shaft (70) is located in the valve body (20), and an end thereof is fixedly disposed at the bottom portion of the cavity of the valve body (20); the valve core structure is sleeved on an outer periphery of the valve core shaft (70) and is rotatably disposed in the valve body (20); the limiting assembly (50) is disposed on the valve core shaft (70) and is located on a side of the valve core structure away from the bottom portion of the cavity of the valve body (20); two ends of the elastic member (60) respectively abut against the limiting assembly (50) and the valve core structure so as to press the valve core structure against the valve core sealing gasket (31) and press the valve core sealing gasket (31) against the bottom portion of the cavity of the valve body (20).

8. The multi-way valve according to claim 7, wherein the limiting assembly (50) comprises a retaining ring (51) and a washer (52) sleeved on the valve core shaft (70); the two ends of the elastic member (60) respectively abut against the washer (52) and a top surface of the valve core structure; an annular clamping groove (71) is provided on an outer periphery of the valve core shaft (70), and the retaining ring (51) is fitted into the annular clamping groove (71) to limit a position of the retaining ring (51) on the valve core shaft (70); and the washer (52) is in stop fit with the retaining ring (51).

9. The multi-way valve according to claim 8, wherein a first limiting groove (111) is provided on the side of the valve core structure away from the bottom portion of the cavity of the valve body (20), at least a portion of the valve core shaft (70) is located in the first limiting groove (111), the washer (52) and the elastic member (60) are both located in the first limiting groove (111), two ends of the elastic member (60) respectively abut against the washer (52) and a bottom wall of the first limiting groove (111), a stop shoulder is provided in the first limiting groove (111), and a side of the washer (52) away from the retaining ring (51) is in stop fit with the stop shoulder.

10. The multi-way valve according to claim 9, wherein the first limiting groove (111) comprises a first groove section (1111) and a second groove section (1112) connected to each other, wherein a radial dimension of the first groove section (1111) is larger than that of the second groove section (1112); the first groove section (1111) is located on the side of the valve core structure away from the bottom portion of the cavity of the valve body (20); the washer (52) is movably disposed in the first groove section (1111); a portion of the elastic member (60) is telescopically disposed in the second groove section (1112); a connection position between the first groove section (1111) and the second groove section (1112) forms the stop shoulder; and the washer (52) is in limiting fit with an inner wall of the first groove section (1111) and is in stop fit with a bottom wall of the first groove section (1111).

11. The multi-way valve according to claim 6, wherein the valve core structure is the valve core structure according to claim 4, wherein the inner cylinder (11) of the valve core structure has a first limiting groove (111) having an upward opening; the actuation driving assembly (40) comprises an actuator and a driving rotating shaft (41); an end of the driving rotating shaft (41) is inserted into the cavity of the valve body (20); the end of the driving rotating shaft (41) inserted into the cavity of the valve body (20) is in limiting fit with the first limiting groove (111); and the actuator is in driving connection with the valve core structure through the driving rotating shaft (41).

12. The multi-way valve according to claim 11, wherein a second limiting groove (411) is provided at a bottom portion of the driving rotating shaft (41), and a plurality of mating portions are circumferentially distributed on the end of the driving rotating shaft (41) inserted into the cavity of the valve body (20); a mated portion is provided on the side of the valve core structure away from the bottom portion of the cavity of the valve body (20), and the mating portions and the mated portion are in limiting fit so as to snap-fit the driving rotating shaft (41) and the inner cylinder (11).

13. The multi-way valve according to claim 12, wherein each of the plurality of mating portions is a snap-fitting protrusion (412), and the mated portion comprises the first limiting groove (111) and a plurality of limiting clamping grooves (112) circumferentially spaced apart around an opening edge of the first limiting groove (111), wherein a plurality of snap-fitting protrusions (412) are respectively disposed in the plurality of limiting clamping grooves (112) in a one-to-one correspondence.

14. The multi-way valve according to claim 6, wherein the actuation driving assembly (40) comprises an actuator, and the actuator comprises a housing (42), a power source (43), a gear set (44), a magnetic member (45), and a control board (46); the power source (43) is connected to the housing (42); the gear set (44) is connected to the power source (43); the gear set (44) at least comprises an input gear (441) and an output gear (442), and the power source (43) drives the output gear (442) to rotate through the input gear (441); the output gear (442) is configured to be connected to the valve core structure; the magnetic member (45) is mounted on the output gear (442); a position detection sensor (49) is disposed on the control board (46), and the position detection sensor (49) is located between the magnetic member (45) and the control board (46) and is aligned with the magnetic member (45).

15. The multi-way valve according to claim 14, wherein an accommodating groove (4422) is provided at an axial end of the output gear (442), and the magnetic member (45) is located in the accommodating groove (4422).

16. The multi-way valve according to claim 15, wherein the housing (42) is provided with a first limiting portion (4221), and an end of the first limiting portion (4221) extending through the control board (46) abuts against the output gear (442); and a portion of the output gear (442) provided with the accommodating groove (4422), and the magnetic member (45) are both located in a cavity defined by the first limiting portion (4221).

17. The multi-way valve according to claim 16, wherein the housing (42) comprises an upper housing (421) and a lower housing (422), wherein the upper housing (421) and the lower housing (422) are connected and jointly define an accommodating cavity (423) for accommodating the power source (43) and the gear set (44); and
the first limiting portion (4221) is located on an inner wall of the lower housing (422) facing the upper housing (421), and is movably connected to the output gear (442) so as to limit a radial movement of the output gear (442).

18. The multi-way valve according to any one of claims 14 to 17, wherein the housing (42) comprises an upper housing (421) and a lower housing (422), wherein the upper housing (421) and the lower housing (422) are connected and jointly define an accommodating cavity (423) for accommodating the power source (43) and the gear set (44); and
a second limiting portion (4214) is provided on an inner wall of the upper housing (421) facing the lower housing (422), and is movably connected to the output gear (442) so as to limit a radial movement of the output gear (442).

19. The multi-way valve according to claim 18, wherein a limiting boss (4211) coaxially arranged with the output gear (442) protrudes from the inner wall of the upper housing (421) facing the lower housing (422); a positioning groove (4212) is formed on a side of the limiting boss (4211) facing the output gear (442), and a through hole (4213) is formed in a bottom of the positioning groove (4212); a portion of the output gear (442) is capable of passing through the positioning groove (4212) and extending into the through hole (4213), and the limiting boss (4211) and the through hole (4213) form the second limiting portion (4214).

20. The multi-way valve according to claim 14, wherein at least two electric wires (433) are provided between the power source (43) and the control board (46); at an end of each of the at least two electric wires (433) is provided with an electrical clip (435), and the electrical clip (435) is snap-fitted with a power supply terminal (434) of the power source (43); at an other end of the each of the at least two electric wires (433) is provided with a pin (47), and the pin (47) is snap-fitted with the control board (46); and the actuator further comprises a connector (48), and the connector (48) is snap-fitted with the control board (46) through the pin (47).
